# EUROPÄISCHE PATENTSCHRIFT

(11) **EP 2 236 233 B1**
(45) Veröffentlichungstag und Bekanntmachung des Hinweises auf die Patenterteilung: **10.05.2017**
(21) Anmeldenummer: 10003534.4
(22) Anmeldetag: 31.03.2010
(51) Int. Cl.: B23D 51/10

(54) **Stichsäge**
Jig saw
Scie sauteuse

(30) Priorität: 03.04.2009 DE 102009016254
(43) Veröffentlichungstag der Anmeldung: 06.10.2010
(73) Patentinhaber: Mafell AG, 78727 Oberndorf a.N. (DE)
(72) Erfinder: Eisenbeis, Dieter, 72160 Horb-Obertalheim (DE); Hermle, Hans, 78661 Dietlingen (DE); Schellhammer, Karl, 72172 Sulz (DE)
(74) Vertreter: Manitz Finsterwald Patentanwälte PartmbB

(56) Entgegenhaltungen:
- WO-A1-2004/054746
- DE-B3-102007 009 943
- US-A- 4 601 477
- US-A- 5 103 565
- US-A1- 2005 246 901
- US-B1- 6 233 833

## Beschreibung

Die Erfindung betrifft eine Stichsäge gemäß dem Oberbegriff des Anspruchs 1 mit einem Sägeblatt und einem Stößel für eine Hubbewegung des Sägeblatts entlang einer Stößelachse.

Eine solche Stichsäge ist der US-A-5 103 565 zu entnehmen. Derartige Stichsägen sind grundsätzlich bekannt. Der Hubbewegung des Sägeblatts kann bei sogenannten Pendelhubstichsägen ferner eine Pendelbewegung überlagert sein, welche durch einen auf das Sägeblatt wirkenden Pendelerreger herbeigeführt wird. Es ist eine Reihe von Maßnahmen zur Optimierung der Sägeergebnisse von Stichsägen vorgeschlagen worden. Diese Maßnahmen zielen darauf ab, das Sägeblatt in seinem unteren Bereich zu führen bzw. zu stabilisieren. Bei Pendelhubstichsägen kann zu diesem Zweck beispielsweise der stets unmittelbar am Sägeblatt angreifende Pendelerreger genutzt werden.
Die Druckschrift US-A-5 103 565 offenbart eine Stichsäge mit einem rohrförmigen Stößel, an dessen unterem Ende eine Spannvorrichtung zum Einspannen des Sägeblatts vorgesehen ist. Beim Einspannen wird das Sägeblatt zwischen einem ebenen Abschnitt der Rohrinnenwand und der Anpressfläche eines Klemmelements eingeklemmt.
In der Druckschrift US-A-4 601 477 ist eine Spannvorrichtung für ein Stichsägeblatt offenbart, welche eine federvorgespannte Klemmrolle umfasst. Die Klemmrolle ist in einer eine Schrägfläche aufweisenden Sägeblattaufnahme beweglich gelagert.
Das Dokument US-B-6 233 833 offenbart eine elektrische Stichsäge, bei der eine kreuzschlitzförmige Sägeblattaufnahme in einem Klemmkörper ausgebildet ist. Ein Arretierstift fixiert das Sägeblatt in der Sägeblattaufnahme.
Trotz der Führungs- bzw. Stabilisierungsmaßnahmen sind die Sägeergebnisse derartiger Stichsägen hinsichtlich Exaktheit und Reproduzierbarkeit nicht immer zufrieden stellend.
Aufgabe der Erfindung ist es daher, die mit einer Stichsäge der eingangs genannten Art erzielbaren Sägeergebnisse weiter zu verbessern.

Die Lösung dieser Aufgabe erfolgt durch die Merkmale des Anspruchs 1. Die Stichsäge umfasst eine in den Stößel integrierte Spannvorrichtung zum festen Einspannen des Sägeblatts am Stößel. Es hat sich gezeigt, dass durch ein festes Einspannen des Sägeblatts am Stößel eine wesentliche Verbesserung der Sägeergebnisse erzielbar ist. Insbesondere ist eine derartige Verbesserung der Sägeergebnisse zu beobachten, wenn das Sägeblatt mit Ausnahme des festen Einspannens am Stößel ansonsten vollkommen frei und ungeführt ist. Man erklärt sich das ausgezeichnete Sägeverhalten eines derart fest eingespannten Sägeblatts mit dem Prinzip, das so genannten "Japansägen" zugrunde liegt, bei welchen das Sägeblatt ebenfalls völlig frei und ungeführt ist bzw. sich gewissermaßen selbst überlassen wird. Das Sägeblatt wird hierbei ausschließlich gezogen und läuft damit lediglich nach. Durch diesen Nachlauf ist das Sägeblatt in der Lage, sich selbst gerade zu ziehen bzw. sich selbst optimal auszurichten. Hierdurch wird der Umstand ausgenutzt, dass bei Stichsägen der Sägevorgang während des Aufwärts-Hubs des Sägeblatts erfolgt. Der das Sägeblatt an dessen oberem Ende fest einspannende Stößel zieht das Sägeblatt - wie beim Arbeiten mit einer Japansäge - durch das Werkstück, d.h. das Sägeblatt läuft lediglich nach. Die Ausnutzung des Prinzips der Japansäge ermöglicht es, relativ dünne Sägeblätter für die Stichsäge zu verwenden, welche ebenfalls eine Besonderheit der Japansägen sind. Dadurch, dass die Spannvorrichtung in den Stößel integriert ist, ist stets ein optimaler fester Verbund zwischen Sägeblatt und Stößel gewährleistet.

Die Spannvorrichtung umfasst eine Ausrichtfläche für eine Wange des Sägeblatts und ein Spannorgan, wobei eine mit einer Komponente parallel zur Stößelachse erfolgende Stellbewegung des Spannorgans in eine senkrecht zur Stößelachse erfolgende Spannbewegung des Spannorgans in Richtung der Ausrichtfläche umsetzbar ist. Auf diese Weise kann der Umstand ausgenutzt werden, dass es sich bei Sägeblättern für Stichsägen in der Regel um Stanzteile handelt, die naturgemäß exakt ebene, hier auch als Wangen bezeichnete Seitenflächen bzw. Flachseiten aufweisen. Bei der Ausrichtfläche kann es sich insbesondere um eine ebene Fläche handeln. Wenn das Sägeblatt mit seiner Wange gegen die vorgesehene Ausrichtfläche gedrückt wird, ist das Sägeblatt folglich automatisch exakt entsprechend der Orientierung dieser Ausrichtfläche und gleichzeitig in hohem Maße verdrehsicher ausgerichtet. Durch dieses Einspannen des Sägeblatts zwischen der Ausrichtfläche und dem Spannorgan ist es insbesondere nicht erforderlich, für das Einspannen des Sägeblatts dessen Schmalseiten zu verwenden, die einen vergleichsweise unexakten Verlauf aufweisen und insbesondere von Sägeblatt zu Sägeblatt variieren, so dass eine exakte Sägeblatt-Ausrichtung und damit eine eindeutig definierte Führung des Sägeblatts mittels des Stößels nicht realisierbar wäre. Durch die Umsetzbarkeit einer zumindest komponentenweise parallel zur Stößelachse erfolgenden Stellbewegung in eine senkrecht zur Stößelachse erfolgende Spannbewegung des Spannorgans kann eine für den Benutzer besonders einfache Möglichkeit zur Betätigung der Spannvorrichtung realisiert werden. Das Spannorgan ist bei eingespanntem Sägeblatt mittels eines Kraftspeichers, insbesondere eine Feder, mit einer in Richtung der Stellbewegung wirkenden Spannkraft beaufschlagt. Der Benutzer muss also nicht selbst aktiv Kraft zum Einspannen ausüben und dabei das richtige Maß abschätzen, sondern es wird durch den Kraftspeicher gewissermaßen automatisch der optimale Betrag an Spannkraft bereitgestellt. Bedeutsam ist, dass die Spannkraft in Richtung der Stellbewegung wirkt und erst in die Spannrichtung umzusetzen ist. Hierdurch kann der Kraftspeicher nämlich in vorteilhafter Weise in den Stößel integriert werden. Dabei spielt es keine Rolle, ob der Kraftspeicher direkt auf das Spannorgan wirkt oder ob ein oder mehrere Übertragungselemente zwischengeschaltet sind.
Das Spannorgan ist mittels einer Betätigungseinrichtung gegen die Spannkraft von der Ausrichtfläche weg bewegbar, um die Spannvorrichtung in eine Freigabestellung zu überführen. In der Freigabestellung kann das Sägeblatt ausgetauscht werden. Nach Einsetzen eines neuen Sägeblatts kann die Spannkraft des Kraftspeichers mittels der Betätigungseinrichtung gewissermaßen wieder freigegeben werden, wodurch ein festes Einspannen des neuen Sägeblatts am Stößel erreicht wird. Erfindungsgemäß umfasst die Betätigungseinrichtung ein außerhalb des Stößels angeordnetes, für einen Benutzer von außen zugängliches Betätigungsorgan sowie eine zumindest teilweise außerhalb des Stößels angeordnete Übertragungseinrichtung zum Betätigen der Spannvorrichtung, wobei die Übertragungseinrichtung eine Umlenkvorrichtung zum Umsetzen einer mit einer Komponente senkrecht zu der Stößelachse erfolgenden Betätigungsbewegung in eine Freigabebewegung des Spannorgans umfasst. Das Betätigungsorgan kann insbesondere derart gestaltet sein, dass eine werkzeuglose Betätigung der Spannvorrichtung möglich ist. Es kann sich bei dem Betätigungsorgan beispielsweise um einen schwenkbaren Spannknopf, einen Spannhebel oder um einen Drehknopf handeln. Die Übertragungseinrichtung stellt eine Verbindung zwischen dem außerhalb des Stößels befindlichen Betätigungsorgan und der in den Stößel integrierten Spannvorrichtung her. Die Umlenkvorrichtung bewirkt in gewisser Weise eine Entkopplung der Betätigungseinrichtung von den entlang der Stößelachse angeordneten Spannvorrichtungskomponenten. Eine quer zur Stößelachse erfolgende Betätigungsbewegung kann insbesondere konstruktive Vorteile gegenüber einer parallel zur Stößelachse erfolgenden Betätigungsbewegung aufweisen.

Eine Stichsäge mit den hier angegebenen Merkmalen ermöglicht bessere Sägeergebnisse und einen geringeren Sägeblatt-Verschleiß. Da ferner keine Führungen oder Stabilisierungen, welche unmittelbar mit dem Sägeblatt zusammenwirken, erforderlich sind, ist es hier außerdem nicht mehr notwendig, eine Halteeinrichtung zur Kopplung des Sägeblatts mit dem Stößel vorzusehen, die bei der herkömmlichen Vorgehensweise exakt zentrisch ausgerichtet werden musste.

Weiterbildungen der Erfindung sind in den abhängigen Ansprüchen, der Beschreibung sowie der Zeichnung angegeben.

Vorzugsweise ist zum Umsetzen der Stellbewegung in die Spannbewegung ein selbsthemmender Umlenkmechanismus vorgesehen. Ein Selbsthemmungseffekt kann auf verschiedene konstruktive Arten realisiert werden. Durch die Selbsthemmung kann ein besonders stabiler Verbund zwischen Sägeblatt und Stößel erzielt werden. Insbesondere ist durch die Selbsthemmung diejenige Kraft, die zum Lösen des Sägeblatts auf das Sägeblatt ausgeübt werden müsste, um gegen die Spannkraft wirken zu können, wesentlich höher als ohne Selbsthemmung. Hierdurch genügt eine relativ geringe Spannkraft, um eine in vergleichsweise hohem Maße feste Einspannung des Sägeblatts zu realisieren.

Gemäß einer Ausführungsform umfasst das Spannorgan einen, insbesondere keilförmigen, Steuerabschnitt, der mit einer an dem Stößel oder an einem Bestandteil der Spannvorrichtung ausgebildeten, insbesondere in Form einer Schrägfläche vorgesehenen, Steuerfläche zusammenwirkt. Eine derartige Ausgestaltung zeichnet sich insbesondere durch ihren einfachen Aufbau und ihre Zuverlässigkeit aus. Die Steuerfläche kann eine spezielle Formgebung aufweisen, um die Kraftübertragung in optimaler Weise anzupassen.

Gemäß einer Ausgestaltung der Erfindung umfasst die Stichsäge einen Pendelerreger für eine Pendelbewegung des Sägeblatts, wobei in wenigstens einer senkrecht zur Stößelachse verlaufenden Ebene der Stößel einerseits und ein Stößelgegengewicht oder zumindest ein Bestandteil einer Gegengewichtssteuerung andererseits einander durchdringen, wobei die Umlenkvorrichtung in Bezug auf die Stößelachse unterhalb der Ebene angeordnet ist. Bei einer gegenseitigen Durchdringung von Gegengewichtsmechanismus und Stößel ist das Innere des Stößels nicht durchgehend zugänglich, so dass eine kontinuierliche Kraftübertragung von der Oberseite bis zur Unterseite des Stößels nicht möglich ist. Durch die unterhalb der Durchdringungsebene angeordnete Umlenkvorrichtung ist es möglich, den durch den Durchdringungsbereich gewissermaßen "blockierten" Stößelabschnitt zu umgehen und im unteren Teil des Stößels einen Zugriff auf die integrierte Spannvorrichtung herzustellen.

Der Stößel kann insbesondere wenigstens teilweise als ein die Spannvorrichtung enthaltendes Rohr ausgebildet sein und wenigstens ein Element der Übertragungseinrichtung kann durch einen in der Rohrwand ausgebildeten Durchbruch geführt sein. Der Durchbruch ermöglicht einen Zugriff auf die in dem Stößel befindlichen Komponenten der Spannvorrichtung von außen und schafft somit die Möglichkeit für die seitliche Umgehung des Durchdringungsbereichs.

Gemäß einer Ausführungsform umfasst die Umlenkvorrichtung ein mit einer Komponente senkrecht zur Stößelachse beweglich am Stößel gelagertes Steuerelement, das eine mit der Spannvorrichtung zusammenwirkende Steuerkurve aufweist. Das Steuerelement kann beispielsweise einen Keil- oder Rampenabschnitt aufweisen, der mit einer entsprechenden Schrägfläche eines Bestandteils der Spannvorrichtung zusammenwirkt. Durch diese Ausgestaltung ist eine einfache und anpassbare Kraftumlenkung möglich.

Die Steuerkurve kann einen Halteabschnitt aufweisen, um die Spannvorrichtung gegen die Spannkraft in der Freigabestellung zu halten. Beispielsweise kann sich an einen Rampenabschnitt wie oben erwähnt ein Plateauabschnitt anschließen, welcher ein Festhalten des Spannorgans in der Freigabestellung bewirkt und insbesondere senkrecht zur Stößelachse verläuft. Der Benutzer muss dann zum Auswechseln eines Sägeblatts das Betätigungsorgan nicht festhalten, da dieses aufgrund des Plateauabschnitts von selbst in der der Freigabestellung entsprechenden Stellung bleibt. Der Benutzer hat somit während des Auswechselns des Sägeblatts beide Hände frei.

Gemäß einer Ausführungsform umfasst die Übertragungseinrichtung eine, bevorzugt parallel zur Stößelachse außerhalb des Stößels verlaufende, Spannwelle mit einem Exzenter, wobei der Exzenter mit dem Steuerelement zusammenwirkt, um eine Drehbewegung der Spannwelle in eine Bewegung des Steuerelements umzusetzen. Eine derartige Ausgestaltung ermöglicht auf einfache Weise die Umsetzung einer bedienungsfreundlichen Schwenkbewegung des Betätigungsorgans in eine im Wesentlichen linear verlaufende Bewegung des Steuerelements.

Die Übertragungseinrichtung kann dazu ausgebildet sein, die Hubbewegung des Stößels zuzulassen, wobei insbesondere das Steuerelement in einer Richtung parallel zur Stößelachse relativ zur Übertragungseinrichtung frei beweglich ist, wobei bevorzugt das Steuerelement eine Öse für einen Eingriff mit einem parallel zur Stößelachse verlaufenden Steuerabschnitt des Exzenters aufweist. Es wird also eine Entkopplung der Kraftübertragung zwischen Betätigungsorgan und Stößel in einer Richtung geschaffen, und zwar in der parallel zur Stößelachse verlaufenden Richtung, wobei aber die notwendige Kraftübertragung zwischen den Bauteilen in anderen Richtungen erhalten bleibt. Die Zulassung der Hubbewegung kann beispielsweise durch geeignete Gleitführungen erreicht werden, wobei die erwähnte Öse-Steuerabschnitt-Koppelung nur ein Beispiel darstellt. Es wird so vermieden, dass sich das Betätigungsorgan mit dem Stößel mitbewegt.

Vorzugsweise ist ein Federelement vorgesehen, welches das eingespannte Sägeblatt in eine Auswurfrichtung vorspannt. Das Sägeblatt wird also beim Lösen der Spannvorrichtung automatisch ausgeworfen. Dies erleichtert das Auswechseln von Sägeblättern, da beispielsweise auch bei ungünstig orientierter Stichsäge ein einfaches Entnehmen des auszuwechselnden Sägeblatts stattfinden kann. Zudem können so auch abgebrochene oder nach längerem Sägebetrieb heiß gewordene Sägeblätter leicht aus der Spannvorrichtung entfernt werden.

Gemäß einer Ausgestaltung ist ein das Spannorgan und die Ausrichtfläche umfassender Spannbereich für unterschiedliche Sägeblätter geeignet und hierzu mit wenigstens einer Aufnahme für zumindest ein an bestimmten Sägeblättern ausgebildetes Profil versehen. Dadurch wird es möglich, Sägeblätter unterschiedlichster Ausgestaltung an ein und derselben Stichsäge zu verwenden und dabei stets ein festes Einspannen am Stößel zu gewährleisten. Die Aufnahmen können ferner für ein Einrasten oder Einhaken der Sägeblätter in der Spannvorrichtung genutzt werden.

Die Erfindung wird im Folgenden beispielhaft unter Bezugnahme auf die Zeichnung beschrieben.
- Fig. 1: zeigt einen Stößel einer Stichsäge gemäß einer Ausführungsform der Erfindung in einer schematischen Schnittansicht von vorn.
- Fig. 2: zeigt den Stößel gemäß Fig. 1 sowie eine diesem zugeordnete Betätigungseinrichtung in einer schematischen Schnittansicht von der Seite.
- Fig. 3: zeigt den Stößel und die Betätigungseinrichtung gemäß Fig. 2 in einer schematischen Draufsicht.

Auf den grundsätzlichen Aufbau einer Stichsäge sowie einer Pendelhubsteuerung für deren Sägeblatt wird hier nicht näher eingegangen, da dies grundsätzlich bekannt ist.

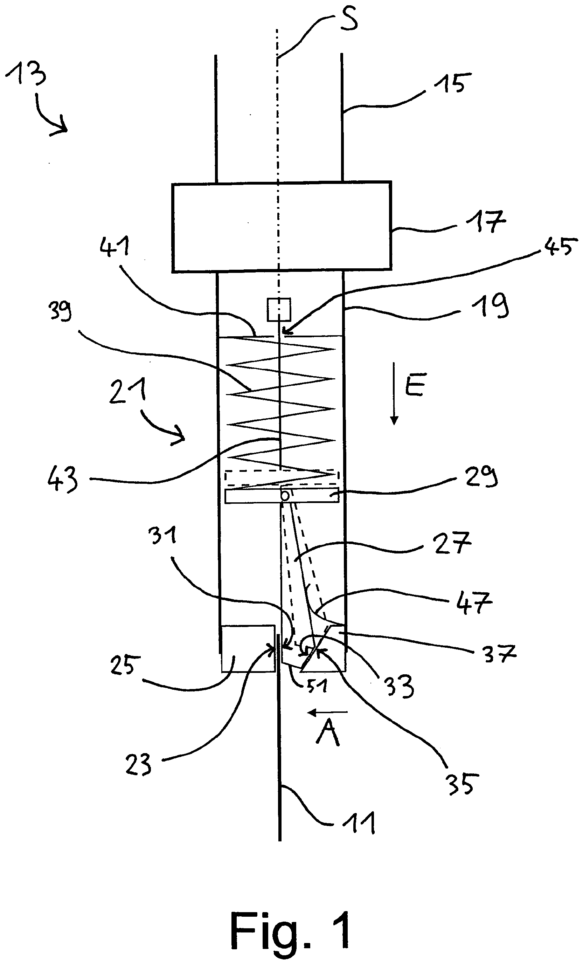

Fig. 1, welche schematisch einen Stößel 13 und ein Sägeblatt 11 einer Stichsäge gemäß einer Ausführungsform der Erfindung zeigt, entspricht einer Vorderansicht der Stichsäge, also einer Ansicht auf eine Schmalseite des Sägeblatts 11. Das Sägeblatt 11 ist im unteren Bereich des Stößels 13 eingespannt, ansonsten aber frei und ungeführt. Der Stößel 13 weist eine Längsachse oder Stößelachse S auf und ist entlang der Stößelachse S in einen oberen Rohrabschnitt 15, einen Durchdringungsabschnitt 17 sowie einen unteren Rohrabschnitt 19 aufgeteilt. Der Durchdringungsabschnitt 17 dient - wie eingangs erläutert - der Aufnahme von Komponenten der Stößelsteuerung bzw. Hubsteuerung für den Stößel und "blockiert" den freien Durchgang zwischen dem oberen Rohrabschnitt 15 und dem unteren Rohrabschnitt 19.

In dem unteren Rohrabschnitt 19 ist eine Spannvorrichtung 21 zum festen Einspannen des Sägeblatts 11 am Stößel 13 angeordnet. Die Spannvorrichtung 21 umfasst eine Ausrichtfläche 23, die an einem am Endbereich des unteren Rohrabschnitts 15 angeordneten Anschlagelement 25 ausgebildet ist, sowie ein Spannorgan 27. Die Ausrichtfläche 23 ist zur Vereinfachung eben dargestellt. Sie kann jedoch geeignete Vertiefungen aufweisen oder hinsichtlich ihres Umfangs in bestimmter Art und Weise geformt sein, um an einer Wange des Sägeblatts 11 ausgebildete Profilstrukturen aufzunehmen. Beispielsweise kann die Ausrichtfläche 23 mit einer zentralen Nut versehen sein, in welche eine an einer Wange des Sägeblatts 11 ausgebildete Rippe eingreifen kann, oder es kann ein Freiraum an beiden Seiten der Ausrichtfläche 23 vorgesehen sein, welcher der Aufnahme von umfänglichen Erhebungen des Sägeblatts 11 dient. Auf diese Weise kann erreicht werden, dass die Ausrichtfläche 23 mit einer Vielzahl von unterschiedlich gestalteten Sägeblättern zusammenwirken kann und die Ausrichtung dabei jeweils anhand des ebenen Abschnitts erfolgt. Zusätzlich können Aufnahmen vorgesehen sein, welche ein Einhaken oder Einrasten des Sägeblatts 11 in der Spannvorrichtung 21 ermöglichen. Die Spannvorrichtung ist somit mit einer Vielzahl von verschiedenen Sägeblättern, insbesondere auch von Sägeblättern unterschiedlicher Dicke oder aus mehreren Einzelblättern zusammengesetzten Sägeblättern, kompatibel.

Das hebelartige Spannorgan 27 ist an einer beweglich in dem unteren Rohrabschnitt 19 des Stößels 13 gelagerten Stützplatte 29 angelenkt. An der der Stützplatte 29 abgewandten Seite des Spannorgans 27 sind ein Spannabschnitt 31 sowie ein Steuerabschnitt 33 ausgebildet. Der Spannabschnitt 31 ist der Ausrichtfläche 23 zugewandt und liegt dem Steuerabschnitt 33 gegenüber. Der Steuerabschnitt 33 ist hier keilförmig ausgebildet und wirkt mit einer als Schrägfläche ausgebildeten Steuerfläche 35 zusammen, welche an einem Gegenelement 37 des Stößels 13 ausgebildet ist.

Die Stützplatte 29 mit dem Spannorgan 27 ist zwischen einer gestrichelt dargestellten Freigabestellung und einer durchgezogen dargestellten Spannstellung verstellbar. Das Zusammenwirken des Steuerabschnitts 33 mit der Steuerfläche 35 bewirkt eine Umsetzung einer parallel zur Stößelachse S erfolgenden Stellbewegung E der Stützplatte 29 in eine senkrecht zur Stößelachse S erfolgende Spannbewegung A des Spannabschnitts 31. Wenn sich die Stützplatte 29 mit dem Spannorgan 27 in der Spannstellung befindet, drückt somit der Spannabschnitt 31 des Spannorgans 27 das Sägeblatt 11 gegen die Ausrichtfläche 23 und bewirkt ein sicheres und festes Einspannen des Sägeblatts 11 am Stößel 13.

Ein Kraftspeicher 39, der hier schematisch als Spiralfeder dargestellt ist, stützt sich an der Stützplatte 29 sowie einer fest mit dem Stößel 13 verbundenen Zwischenwand 41 ab und beaufschlagt somit das Spannorgan 27 bei eingespanntem Sägeblatt 11 mit einer in Richtung der Stellbewegung E wirkenden Spannkraft.

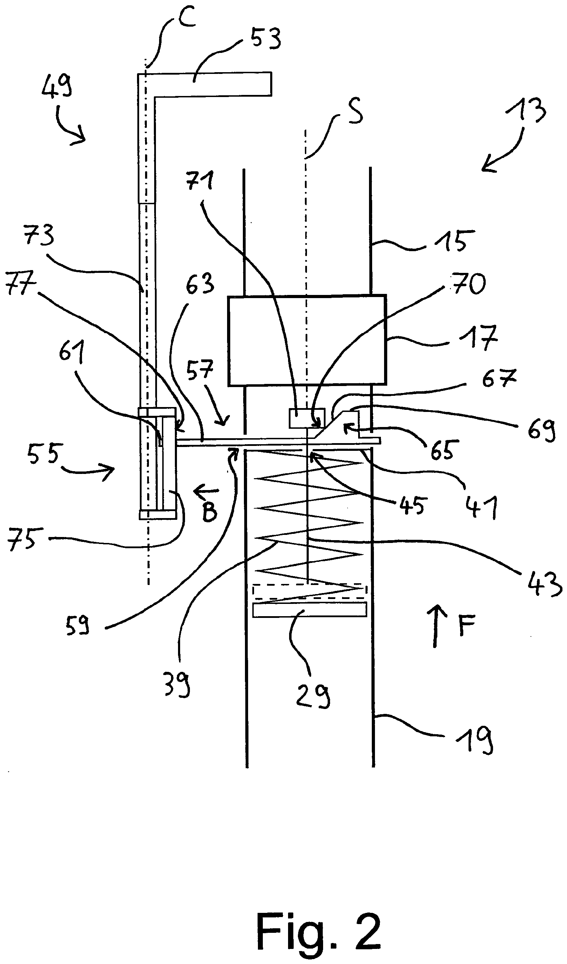

An der Stützplatte 29 ist ein Übertragungskolben 43 befestigt, welcher sich durch eine in der Zwischenwand 41 ausgebildete Durchführung 45 erstreckt und eine Verbindung zu einer Betätigungseinrichtung 49 (Fig. 2) herstellt, die nachfolgend näher beschrieben wird. Durch eine Aufwärtsbewegung des Übertragungskolbens 43 sowie der mit diesem verbundenen Stützplatte 29 kann somit das Sägeblatt 11 freigegeben werden.

Dabei drückt eine Blattfeder 47 das Spannorgan 27 auch in der Freigabestellung in Richtung der Ausrichtfläche 23, wobei hier jedoch nicht die zum Einspannen notwendige starke Spannkraft aufgewendet wird, sondern lediglich eine Kraft von deutlich reduziertem Betrag. Das Spannorgan 27 wird also leicht gegen die Ausrichtfläche 23 gedrückt, was beim Einführen und gegebenenfalls Einrasten des Sägeblatts 11 hilfreich ist. Um trotz an der Ausrichtfläche 23 anliegendem Spannabschnitt 31 ein leichtes Einsetzen des Sägeblatts 11 zu ermöglichen, ist als Einführhilfe ferner eine Abschrägung 51 an der vom Stößel 13 weg weisenden Seite des Spannabschnitts 31 vorgesehen. Das Spannorgan 27 ist also stets in Richtung der Ausrichtfläche 23 vorgespannt.

Die der Freigagestellung entsprechende gestrichelte Darstellung des Spannorgans 27, welche eine relativ große Beabstandung zu der Ausrichtfläche 23 zeigt, dient lediglich der Verdeutlichung. Der Steuerabschnitt 33 des Spannorgans 27 sowie die Steuerfläche 35 des Gegenelements 37 bilden einen selbsthemmenden Umlenkmechanismus für die durch den Kraftspeicher 39 ausgeübte Kraft, welcher die Festigkeit des Einspannens erhöht. Anders als die Blattfeder 47 wirkt also der die Spannkraft bereitstellende Kraftspeicher 39 nicht direkt in Spannrichtung, sondern parallel zur Stößelachse S.

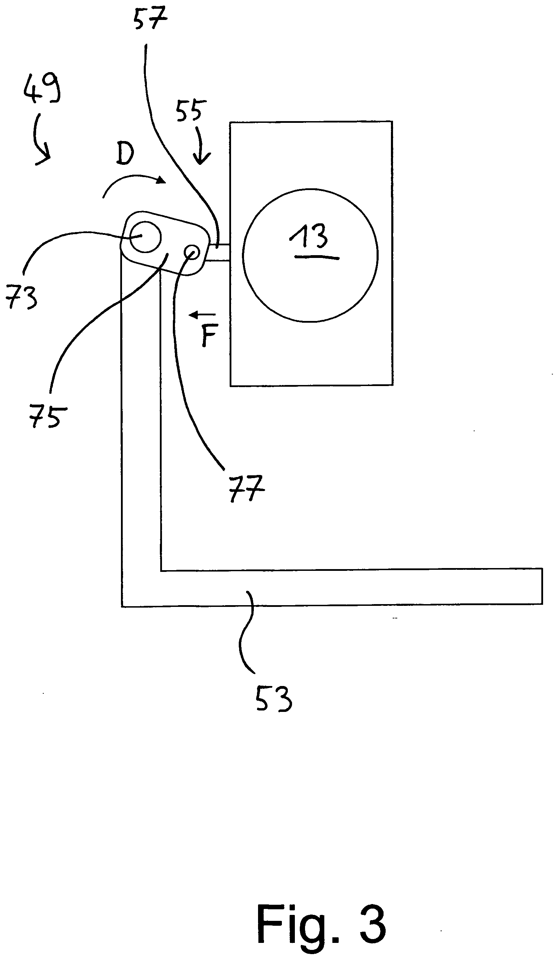

Unter Bezugnahme auf Fig. 2 und 3 wird nun eine Betätigungseinrichtung 49 beschrieben, mittels welcher das Spannorgan 27 gegen die Spannkraft von der Ausrichtfläche 23 weg bewegbar ist, um die Spannvorrichtung 21 zwecks Auswechseln des Sägeblatts 11 in die Freigabestellung zu überführen. Die Betätigungseinrichtung 49 umfasst einen lediglich symbolisch dargestellten Betätigungshebel 53, welcher für einen Benutzer von der Außenseite der Stichsäge zugänglich ist, sowie eine zumindest teilweise außerhalb des Stößels 13 angeordnete Übertragungseinrichtung 55.

Die Übertragungseinrichtung 55 ist in der Lage, eine senkrecht zu der Stößelachse S erfolgende Betätigungsbewegung B in eine Freigabebewegung F des Spannorgans 27 umzulenken. Zu diesem Zweck ist ein Steuerelement 57 vorgesehen, welches unterhalb des Durchdringungsabschnitts 17 durch einen in der Rohrwand des unteren Rohrabschnitts 19 ausgebildeten Durchbruch 59 geführt ist und senkrecht zu der Stößelachse S bewegt werden kann. Das Steuerelement 57 weist eine Öse 61, einen Arm 63 sowie eine Steuerkurve 65 mit einem Rampenabschnitt 67 und einen sich an den Rampenabschnitt 67 anschließenden Plateauabschnitt 69 auf.

Die Steuerkurve 65 wirkt mit einer entsprechenden Gegenfläche 70 eines Wirkelements 71 zusammen, welches an dem Übertragungskolben 43 befestigt ist. Durch eine Linearbewegung des Steuerelements 57 senkrecht zu der Stößelachse S kann der Übertragungskolben 43 mit der Stützplatte 29 gegen die Spannkraft des Kraftspeichers 39 angehoben werden. Bei einer Bewegung des Steuerelements 57 gemäß Fig. 2 nach links tritt somit das Wirkelement 71 zunächst in Kontakt mit dem Rampenabschnitt 67 und löst dadurch eine Aufwärtsbewegung des Übertragungskolbens 43 aus. Sobald das Wirkelement 71 in Kontakt mit dem Plateauabschnitt 69 tritt, ist ein selbsttätiges Zurückbewegen des Übertragungskolbens 43 ausgeschlossen und das Spannorgan 27 bleibt trotz der Spannkraft des Kraftspeichers 39 dauerhaft in der Freigabestellung. Die Steuerkurve 65 kann je nach Anwendung auch komplexer geformt sein und mehr als zwei Abschnitte aufweisen.

Das Freigeben der Spannvorrichtung 21 wird also letztlich durch ein Ziehen an dem Steuerelement 57 bewerkstelligt. Um die Betätigung der Spannvorrichtung 21 zu vereinfachen, umfasst die Übertragungseinrichtung 55 weitere Komponenten, welche ein Umsetzen einer Dreh- oder Schwenkbewegung D (Fig. 3) des Betätigungshebels 53 in eine - je nach Dreh- bzw. Schwenkrichtung - Ziehbewegung (Freigeben) oder Schiebebewegung (Einspannen) für das Steuerelement 57 bewerkstelligen, wie nachfolgend näher ausgeführt wird.

Außerhalb des Stößels 13 ist eine parallel zur Stößelachse S verlaufende Spannwelle 73 angeordnet, die mit dem Betätigungshebel 53 in Verbindung steht und mittels diesem um eine Schwenkachse C verschwenkbar ist. Im Bereich des durch den Durchbruch 59 geführten Steuerelements 57 ist ein Exzenter 75 an der Spannwelle 73 vorgesehen, welcher einen Steuerabschnitt 77 umfasst, der bei der vorliegenden Ausführungsform als Gleitführungsabschnitt ausgebildet ist und mit der Öse 61 des Steuerelements 57 in Eingriff steht. Der Steuerabschnitt 77 ist ausreichend lang bemessen, um ein ungehindertes Gleiten der Öse 61 während eines vollständigen Hubs des Stößels 13 auch bei Pendelbewegungen zu ermöglichen.

Bei einem Verschwenken der Spannwelle 73 durch Drehen oder Schwenken des Betätigungshebels 53 gemäß Fig. 3 im Uhrzeigersinn kann der Exzenter 75 ausgelenkt und somit das Steuerelement 57 verschoben werden. Es wird also eine Schwenk- bzw. Drehbewegung der Spannwelle 73 in eine im Wesentlichen lineare Bewegung des Steuerelements 57 umgesetzt. Die Lagerung des Steuerelements 57 ist dabei - anders als in der schematischen Fig. 3 dargestellt - ausreichend groß bemessen, um die durch die Exzenterbewegung unvermeidlicherweise auftretenden Querkomponenten der Zugbewegung aufzunehmen.

Die erfindungsgemäße Stichsäge ermöglicht ein festes Einspannen des Sägeblatts 11 direkt am Stößel 13, wobei durch die Ausrichtfläche 23 Ungenauigkeiten in der Sägeblattausrichtung vermieden werden. Die Verbindung zwischen dem Sägeblatt 11 und dem Stößel 13 weist eine hohe Stabilität auf, so dass es möglich ist, das Sägeblatt 11 wie bei einer Japansäge ansonsten frei und ungeführt zu lassen. Sollte es die Anwendung erfordern, kann das Sägeblatt 11 jedoch trotzdem im unteren Bereich stabilisiert bzw. geführt werden.

Die Spannvorrichtung 21 ist im Wesentlichen in den Stößel 13 integriert, wobei jedoch eine "Blockierung" des freien Innenraums des Stößels 13 durch Bestandteile einer Pendelhubsteuerung einer Betätigung der Spannvorrichtung von der Oberseite der Stichsäge aus nicht im Wege steht, da die Betätigungseinrichtung 49 außen um den Durchdringungsbereich herumgeführt ist.

Das Einspannen des Sägeblatts 11 erfolgt stets mit der gleichen, durch den Kraftspeicher 39 vorgegebenen Spannkraft, welche entsprechend optimiert ist. Der durch die Kraftumlenkung bewirkte Selbsthemmungseffekt der Spannvorrichtung 21 erhöht zusätzlich die Festigkeit der Spannverbindung. Ein Benutzer kann bei einem vorzunehmenden Sägeblattwechsel den Betätigungshebel 53 verschwenken und somit die Spannvorrichtung lösen, wobei der Betätigungshebel 53 in vorteilhafter Weise trotz der Spannkraft des Kraftspeichers 39 in der Freigabestellung bleibt. Das Sägeblatt 11 kann somit - gegebenenfalls gegen die leichte Andruckkraft der Blattfeder 47 - von der Ausrichtfläche 23 wegbewegt und nach unten abgezogen werden. Ein neues Sägeblatt 11 kann dann von unten eingeführt werden, wobei die Blattfeder 47 ein Einrasten des Sägeblatts in eine entsprechende Aufnahme - sofern vorgesehen - unterstützt. Das neue Sägeblatt 11 kann also bereits vor Betätigen der Spannvorrichtung 21 in der korrekten Stellung gehalten werden, so dass der Benutzer in bequemer Weise den Betätigungshebel 53 wieder zurückstellen kann, ohne befürchten zu müssen, während des Zurückstellens eine versehentliche Verschiebung oder Fehlausrichtung des Sägeblatts 11 herbeizuführen.

### Bezugszeichenliste

- 11: Sägeblatt
- 13: Stößel
- 15: oberer Rohrabschnitt
- 17: Durchdringungsabschnitt
- 19: unterer Rohrabschnitt
- 21: Spannvorrichtung
- 23: Ausrichtfläche
- 25: Anschlagelement
- 27: Spannorgan
- 29: Stützplatte
- 31: Spannabschnitt
- 33: Steuerabschnitt
- 35: Steuerfläche
- 37: Gegenelement
- 39: Kraftspeicher
- 41: Zwischenwand
- 43: Übertragungskolben
- 45: Durchführung
- 47: Blattfeder
- 49: Betätigungseinrichtung
- 51: Abschrägung
- 53: Betätigungshebel
- 55: Übertragungseinrichtung
- 57: Steuerelement
- 59: Durchbruch
- 61: Öse
- 63: Arm
- 65: Steuerkurve
- 67: Rampenabschnitt
- 69: Plateauabschnitt
- 70: Gegenfläche
- 71: Wirkelement
- 73: Spannwelle
- 75: Exzenter
- 77: Steuerabschnitt

- S: Stößelachse
- C: Schwenkachse
- E: Stellbewegung
- A: Spannbewegung
- D: Drehbewegung
- B: Betätigungsbewegung
- F: Freigabebewegung

## Patentansprüche

1. Stichsäge mit
einem Sägeblatt (11),
einem Stößel (13) für eine Hubbewegung des Sägeblatts (11) entlang einer Stößelachse (S), und
einer in den Stößel (13) integrierten Spannvorrichtung (21) zum festen Einspannen des Sägeblatts (11) am Stößel (13), wobei die Spannvorrichtung (21) eine Ausrichtfläche (23) für eine Wange des Sägeblatts (11) und ein Spannorgan (27) umfasst,
wobei eine mit einer Komponente parallel zur Stößelachse (S) erfolgende Stellbewegung (E) des Spannorgans (27) in eine senkrecht zur Stößelachse (S) erfolgende Spannbewegung (A) des Spannorgans (27) in Richtung der Ausrichtfläche (23) umsetzbar ist, und
wobei das Spannorgan (27) bei eingespanntem Sägeblatt (11) mittels eines Kraftspeichers (39), insbesondere einer Feder, mit einer in Richtung der Stellbewegung (E) wirkenden Spannkraft beaufschlagt ist,
wobei das Spannorgan (27) mittels einer Betätigungseinrichtung (49) gegen die Spannkraft von der Ausrichtfläche (23) weg bewegbar ist, um die Spannvorrichtung (21) in eine Freigabestellung zu überführen,
**dadurch gekennzeichnet, dass**
die Betätigungseinrichtung (49) ein außerhalb des Stößels (13) angeordnetes, für einen Benutzer von außen zugängliches Betätigungsorgan (53) sowie eine zumindest teilweise außerhalb des Stößels (13) angeordnete Übertragungseinrichtung (55) zum Betätigen der Spannvorrichtung (21) umfasst, wobei die Übertragungseinrichtung (55) eine Umlenkvorrichtung zum Umsetzen einer mit einer Komponente senkrecht zu der Stößelachse (S) erfolgenden Betätigungsbewegung (B) in eine Freigabebewegung (F) des Spannorgans (27) umfasst.

2. Stichsäge nach Anspruch 1,
**dadurch gekennzeichnet, dass**
zum Umsetzen der Stellbewegung (E) in die Spannbewegung (A) ein selbsthemmender Umlenkmechanismus vorgesehen ist.

3. Stichsäge nach Anspruch 1 oder 2,
**dadurch gekennzeichnet, dass**
das Spannorgan (27) einen, insbesondere keilförmigen, Steuerabschnitt (33) umfasst, der mit einer an dem Stößel (13) oder an einem Bestandteil der Spannvorrichtung (21) ausgebildeten, insbesondere in Form einer Schrägfläche vorgesehenen, Steuerfläche (35) zusammenwirkt.

4. Stichsäge nach einem der voranstehenden Ansprüche,
**dadurch gekennzeichnet, dass**
die Stichsäge einen Pendelerreger für eine Pendelbewegung des Sägeblatts (11) umfasst, wobei in wenigstens einer senkrecht zur Stößelachse (S) verlaufenden Ebene der Stößel (13) einerseits und ein Stößel-Gegengewicht oder zumindest ein Bestandteil einer Gegengewichtsteuerung andererseits einander durchdringen, wobei die Umlenkvorrichtung in Bezug auf die Stößelachse (S) unterhalb der Ebene angeordnet ist.

5. Stichsäge nach einem der voranstehenden Ansprüche,
**dadurch gekennzeichnet, dass**
der Stößel (13) wenigstens teilweise als ein die Spannvorrichtung (21) enthaltendes Rohr ausgebildet ist und wenigstens ein Element der Übertragungseinrichtung (55) durch einen in der Rohrwand ausgebildeten Durchbruch (59) geführt ist.

6. Stichsäge nach einem der voranstehenden Ansprüche,
**dadurch gekennzeichnet, dass**
die Umlenkvorrichtung ein mit einer Komponente senkrecht zur Stößelachse (S) beweglich am Stößel gelagertes Steuerelement (57) umfasst, das eine mit der Spannvorrichtung (21) zusammenwirkende Steuerkurve (65) aufweist.

7. Stichsäge nach Anspruch 6,
**dadurch gekennzeichnet, dass**
die Steuerkurve (65) einen Halteabschnitt (69) aufweist, um die Spannvorrichtung (21) gegen die Spannkraft in der Freigabestellung zu halten.

8. Stichsäge nach Anspruch 6 oder 7,
**dadurch gekennzeichnet, dass**
die Übertragungseinrichtung (55) eine, bevorzugt parallel zur Stößelachse (S) außerhalb des Stößels (13) verlaufende, Spannwelle (73) mit einem Exzenter (75) umfasst, wobei der Exzenter (75) mit dem Steuerelement (57) zusammenwirkt, um eine Drehbewegung (D) der Spannwelle (73) in eine Bewegung des Steuerelements (57) umzusetzen.

9. Stichsäge nach Anspruch 8,
**dadurch gekennzeichnet, dass**
die Übertragungseinrichtung (55) dazu ausgebildet ist, die Hubbewegung des Stößels (13) zuzulassen, wobei insbesondere das Steuerelement (57) in einer Richtung parallel zur Stößelachse (S) relativ zur Übertragungseinrichtung (55) frei beweglich ist, wobei bevorzugt das Steuerelement (57) eine Öse (61) für einen Eingriff mit einem parallel zur Stößelachse (S) verlaufenden Steuerabschnitt (77) des Exzenters (75) aufweist.

10. Stichsäge nach zumindest einem der vorstehenden Ansprüche,
**dadurch gekennzeichnet, dass**
ein Federelement vorgesehen ist, welches das eingespannte Sägeblatt (11) in eine Auswurfrichtung vorspannt.

11. Stichsäge nach zumindest einem der vorstehenden Ansprüche,
**dadurch gekennzeichnet, dass**
ein das Spannorgan (27) und die Ausrichtfläche (23) umfassender Spannbereich für unterschiedliche Sägeblätter (11) geeignet und hierzu mit wenigstens einer Aufnahme für zumindest ein an bestimmten Sägeblättern (11) ausgebildetes Profil versehen ist.

## Claims

1. A jig saw comprising
a saw blade (11);
a plunger (13) for a stroke movement of the saw blade (11) along a plunger axis (S); and
a clamping apparatus (21) integrated into the plunger (13) for a fixed clamping of the saw blade (11) at the plunger (13), wherein the clamping apparatus (21) comprises an alignment surface (23) for a face of the saw blade (11) and a clamping member (27),
wherein an adjustment movement (E) of the clamping member (27) taking place with a component in parallel with the plunger axis (S) can be converted into a clamping movement (A) of the clamping member (27) taking place perpendicular to the plunger axis (S) in the direction of the alignment surface (23);
wherein, with a clamped saw blade (11), the clamping member (27) is acted on by means of a force storing means (39), in particular a spring, with a clamping force acting in the direction of the adjustment movement (E); and
wherein the clamping member (27) can be moved away from the alignment surface (23) against the clamping force by means of an actuation device (49) in order to move the clamping apparatus (21) into a release position,
**characterized in that**
the actuation device (49) comprises an actuation member (53) which is arranged outside the plunger (13) and which is accessible from the outside for a user, and a transmission device (55) arranged at least partly outside the plunger (13) for actuating the clamping apparatus (21), with the transmission device (55) comprising a deflection apparatus for converting an actuation movement (B) taking place with a component perpendicular to the plunger axis (S) into a release movement (F) of the clamping member (27).

2. A jig saw in accordance with claim 1,
**characterized in that**
a self-locking deflection mechanism is provided for converting the adjustment movement (E) into the clamping movement (A).

3. A jig saw in accordance with claim 1 or claim 2,
**characterized in that**
the clamping member (27) comprises a conrol section (33) which is in particular wedge-shaped and which cooperates with a control surface (35) which is formed at the plunger (13) or at a component of the clamping apparatus (21) and which is in particular provided in the shape of a slanted surface.

4. A jig saw in accordance with any one of the preceding claims,
**characterized in that**
the jig saw comprises a pendulum activator for a pendular motion of the saw blade (11), wherein the plunger (13), on the one hand, and a plunger counterweight or at least one component of a counterweight control, on the other hand, pass through one another in at least one plane extending perpendicular to the plunger axis (S), with the deflection apparatus being arranged beneath the plane with respect to the plunger axis (S).

5. A jig saw in accordance with any one of the preceding claims,
**characterized in that**
the plunger (13) is configured at least partly as a tube including the clamping apparatus (21); and **in that** at least one element of the transmission device (55) is led through an aperture (59) formed in the tube wall.

6. A jig saw in accordance with any one of the preceding claims,
**characterized in that**
the deflection apparatus has a control element (57) which is movably supported at the plunger with a component perpendicular to the plunger axis (S) and which has a control curve (65) cooperating with the clamping apparatus (21).

7. A jig saw in accordance with claim 6,
**characterized in that**
the control curve (65) has a holding section (69) to hold the clamping apparatus (21) in the release position against the clamping force.

8. A jig saw in accordance with claim 6 or claim 7,
**characterized in that**
the transmission device (55) comprises a clamping shaft (73) which preferably extends in parallel with the plunger axis (S) outside the plunger (13) and which has an eccentric portion (75), with the eccentric portion (75) cooperating with the control element (57) in order to convert a rotational movement (D) of the clamping shaft (73) into a movement of the control element (57).

9. A jig saw in accordance with claim 8,
**characterized in that**
the transmission device (55) is configured to allow the stroke movement of the plunger (13), with the control element (57) in particular being freely movable relative to the transmission device (55) in a direction in parallel with the plunger axis (S); and with the control element (57) preferably having an eyelet (61) for an engagement with a control section (77) of the eccentric portion (75) extending in parallel with the plunger axis (S).

10. A jig saw in accordance with at least one of the preceding claims,
**characterized in that**
a spring element is provided which preloads the clamped saw blade (11) in a direction of ejection.

11. A jig saw in accordance with at least one of the preceding claims,
**characterized in that**
a clamping region which comprises the clamping member (27) and the alignment surface (23) is suitable for different saw blades (11) and is provided for this purpose with at least one receiver for at least one profile formed at specific saw blades (11).

## Revendications

1. Scie sauteuse comportant
une lame de scie (11),
un poussoir (13) pour un mouvement de levage de la lame de scie (11) le long d'un axe de poussoir (S), et
un dispositif de serrage (21) intégré dans le poussoir (13) et destiné à serrer fermement la lame de scie (11) sur le poussoir (13), le dispositif de serrage (21) comprenant une surface d'orientation (23) pour une joue de la lame de scie (11) et un organe de serrage (27),
dans laquelle un mouvement de réglage (E) de l'organe de serrage (27) qui s'effectue avec une composante parallèlement à l'axe de poussoir (S) est transformable en un mouvement de serrage (A) de l'organe de serrage (27) qui s'effectue perpendiculairement à l'axe de poussoir (S) en direction de la surface d'orientation (23), et
dans laquelle, la lame de scie (11) étant serrée, l'organe de serrage (27) est susceptible d'être sollicité par une force de serrage agissant en direction du mouvement de réglage (E) au moyen d'un accumulateur de force (39), en particulier d'un ressort,
dans laquelle l'organe de serrage (27) est déplaçable en éloignement de la surface d'orientation (23) à l'encontre de la force de serrage au moyen d'un dispositif d'actionnement (49), afin de transférer le dispositif de serrage (21) dans une position de libération,
**caractérisée en ce que**
le dispositif d'actionnement (49) comprend un organe d'actionnement (53) agencé à l'extérieur du poussoir (13) et accessible depuis l'extérieur pour un utilisateur, ainsi qu'un dispositif de transmission (55) agencé au moins partiellement à l'extérieur du poussoir (13) et destiné à actionner le dispositif de serrage (21), le dispositif de transmission (55) comprenant un dispositif de renvoi pour convertir un mouvement d'actionnement (B), effectué avec une composante perpendiculairement à l'axe de poussoir (S), en un mouvement de libération (F) de l'organe de serrage (27).

2. Scie sauteuse selon la revendication 1,
**caractérisée en ce que**
pour convertir le mouvement de réglage (E) en le mouvement de serrage (A), il est prévu un mécanisme de renvoi autobloquant.

3. Scie sauteuse selon la revendication 1 ou 2,
**caractérisée en ce que**
l'organe de serrage (27) comprend une portion de commande (33) en particulier en forme de coin, qui coopère avec une surface de commande (35) réalisée sur le poussoir (13) ou sur un constituant du dispositif de serrage et prévue en particulier sous la forme d'une surface oblique.

4. Scie sauteuse selon l'une des revendications précédentes,
**caractérisée en ce que**
la scie sauteuse comprend un excitateur pendulaire pour un mouvement pendulaire de la lame de scie (11), et dans au moins un plan perpendiculaire à l'axe de poussoir (S), le poussoir (13) d'une part et un contrepoids de poussoir ou au moins un constituant d'une commande à contrepoids d'autre part se pénètrent mutuellement, le dispositif de renvoi étant agencé au-dessous du plan par rapport à l'axe de poussoir (S).

5. Scie sauteuse selon l'une des revendications précédentes,
**caractérisée en ce que**
le poussoir (13) est réalisé au moins partiellement sous forme de tube contenant le dispositif de serrage (21), et au moins un élément du dispositif de transmission (55) est guidé à travers une traversée (59) ménagée dans la paroi de tube.

6. Scie sauteuse selon l'une des revendications précédentes,
**caractérisée en ce que**
le dispositif de renvoi comprend un élément de commande (57) monté sur le poussoir de façon mobile avec une composante perpendiculairement à l'axe de poussoir (S), qui présente une came de commande (65) coopérant avec le dispositif de serrage (21).

7. Scie sauteuse selon la revendication 6,
**caractérisée en ce que**
la came de commande (65) comprend une portion de retenue (69) pour maintenir le dispositif de serrage (21) dans la position de libération à l'encontre de la force de serrage.

8. Scie sauteuse selon la revendication 6 ou 7,
**caractérisée en ce que**
le dispositif de transmission (55) comprend un arbre de serrage (73) qui s'étend de préférence parallèlement à l'axe de poussoir (S) à l'extérieur du poussoir (13) et qui présente un excentrique (75), l'excentrique (75) coopérant avec l'élément de commande (57) pour convertir un mouvement de rotation (D) de l'arbre de serrage (73) en un mouvement de l'élément de commande (57).

9. Scie sauteuse selon la revendication 8,
**caractérisée en ce que**
le dispositif de transmission (55) est réalisé pour permettre le mouvement de levage du poussoir (13), et en particulier l'élément de commande (57) est librement mobile par rapport au dispositif de transmission dans une direction parallèlement à l'axe de poussoir (S), et de préférence l'élément de commande (57) présente un oeillet (61) pour un engagement avec une portion de commande (77) de l'excentrique, laquelle s'étend parallèlement à l'axe de poussoir (S).

10. Scie sauteuse selon l'une des revendications précédentes,
**caractérisée en ce que**
il est prévu un élément élastique qui précontraint une lame de scie (11) serrée dans une direction d'éjection.

11. Scie sauteuse selon l'une des revendications précédentes,
**caractérisée en ce que**
une zone de serrage qui comprend l'organe de serrage (27) et la surface d'orientation (23) convient pour différentes lames de scie (11) et est à cet effet pourvue d'au moins un logement pour au moins un profil réalisé sur des lames de scie (11) déterminées.
